# EUROPEAN PATENT APPLICATION

(11) **EP 3 760 345 A1**
(43) Date of publication of application: **06.01.2021**
(21) Application number: 19184315.0
(22) Date of filing: 04.07.2019
(51) Int. Cl.: B22F 3/105, B33Y 50/00, B33Y 50/02

(54) **COMPUTER-IMPLEMENTED METHOD OF CALCULATION AND METHOD OF SUPPORTING FOR ADDITIVE MANUFACTURING**

(71) Applicant: Siemens Aktiengesellschaft, 80333 München (DE)
(72) Inventor: Heitmann, Timo, 10245 Berlin (DE); Fergani, Omar, 13347 Berlin (DE); Geisen, Ole, 10781 Berlin (DE); Hajduk, Michael, 12059 Berlin (DE); Albert, Johannes, 13357 Berlin (DE); Müller, Vinzenz, 10559 Berlin (DE)

(57) **Abstract**

A computer-implemented method of calculating a gap distance (d_{G}) between a support structure (1) and a component (10) which is to be build up additively by powder bed fusion is provided. The method comprises, a), providing a component design (CAD) of the component (10), b), selecting at least on support surface (11) of the component (10) based on the provided component design (CAD) and a process analysis, wherein the support surface (11) requires support during the buildup, c), providing a support design of a support structure (1) for supporting the component (10) during the buildup, d) recording CAM-data for the buildup of the component (11), and, e), calculating an optimal gap distance (d_{G}) to be hold during the buildup between the support structure (1) and the support surface (11), wherein the calculation is based on the selected support surface (11) and the recorded CAM-data, wherein the gap distance (d_{G}) is further rated to be large enough to avoid a structural connection between the support surface (11) and the support structure (11). Furthermore, a corresponding computer program product (CPP) and a method of supporting the component (10) is provided. Still further and apparatus (100) for additive manufacturing is provided.

## Description

The present invention relates to a support method in additive manufacturing, particularly to a computer-implemented method of calculating, modelling, or simulating a gap distance between a support structure and the component which is to be built up additively, such as by powder bed fusion. Further, a corresponding computer program product, and an apparatus for additive manufacturing are subject to the present invention.

Preferably, the component denotes a high-performance component, such as a component applied in the power generation, aerospace or automotive sector. The component may as well be a component of a turbo machine, e.g. in the flow path hardware of a gas turbine. The component may, thus, be made of a nickel- or cobalt-based superalloy, particularly a precipitation hardened alloy.

Additive manufacturing (AM) techniques comprise e.g. powder-bed-fusion methods, such as selective laser melting (SLM), selective laser sintering (SLS) or electron beam melting (EBM). Additive manufacturing, particularly powder-bed methods, have proven to be useful and advantageous in the fabrication of prototypes or complex components, such as components of filigree design or functionally cooled components. Further, the additive manufacture stands out for its short chain of process steps which in turn enables material economization and a particularly low lead time.

Further additive manufacturing approaches relate to "Directed Energy Deposition (DED)", such as laser cladding, electron beam or plasma welding, metal inkjet molding (MIM), so-called sheet lamination methods, thermal spraying (VPS LPPS) or cold spray (GDCS).

Apparatuses or strategies for the given methods usually comprise a build platform or platen on which the component is built layer-by-layer after the feeding of a layer of base material which may then be melted, e.g. by an energy beam, such as a laser, and subsequently solidified. The layer thickness is determined by a recoater that moves, e.g. automatically, over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component. Said scanning or irradiation is preferably carried out in a computer-implemented way or via computer aided means, such as computer aided manufacturing (CAM) instructions, which may be present in the form of a dataset. Said dataset or CAM-file may be or refer to a computer program or computer program product.

Consequently, additive manufacturing apparatuses usually comprise a data processing means or controls for executing computer programs, recording and processing data.

A method of selective laser melting is e.g. described in EP 2 601 006 B1. The method of additively manufacturing a component with a support structure is further known from GB 2,458,745 B, for example.

Despite the huge design freedom of additive manufacturing approaches, powder-bed based processes for manufacturing high performance materials particularly still suffer from limitations and drawbacks when large or steep overhangs need to be established or when the component design includes large internal cavities or channels. As powder bed fusion methods require a permanent build direction (vertical direction), portions of the component which form an overhang or protrude in respect of this build direction have to be supported by support structures in order to allow for an expedient buildup.

In this context the support structures may serve the purpose of mechanically supporting said overhang.

As the given processes physically constitute welding processes, it is, however, as least equally important to dissipate heat - which has been put into a powder bed - away from the as-built structure. The powder bed itself is thermally quasi-insulating. Thus, the heat conduction away from the buildup is another important purpose of the given support structures. The heat output via the support structures is particularly important, as the given beam welding methods usually generate thermal gradients of up to 10⁶ K/s. Thereby it is apparent that an "oversized" as well as an "undersized" or not appropriate irradiation or energy input into a powdery layer can likewise impair mechanical and structural properties of the structure which is to be established.

A further challenge in the additive process chain is the ex-post removal of the support structures which usually constitute mere sacrificial or auxiliary means. In case of structurally extremely rigid components, such as components established of superalloys, it is clear that a mechanical, such as manual, ex-post removal by machining is very complicated and time-consuming.

It is an object of the present invention to provide means which significantly improve the additive manufacturing process chain by providing a smart support solution, particularly for powder-bed-based methods. Thus, major limitations which have prevented additive manufacturing technologies from being fully industrialised are solved by the present invention.

The mentioned object is achieved by the subject-matters of the independent claims. Advantageous embodiments are subject-matter of the dependent claims.

An aspect of the present invention relates to a computer-implemented method of calculating or simulating a gap distance between a support structure and a component which is to be manufactured or build-up by additive powder bed fusion.

The method may be a method, wherein all method steps can be fully implemented by generic data processing or computer program means.

The method comprises providing a component design of the component for a later manufacturing process.

In an embodiment, such component design is provided in form of a CAD-file.

The method further comprises selecting or defining at least one support surface of the component based on the provided component design and a process analysis, such as a finite element analysis, wherein the support surface requires support during the buildup. Said requirement of support can particularly be fulfilled, when a given portion of the component is overhanging, i.e. e.g. comprising surfaces or tangents thereof being inclined at an angle of more than 90° as compared to a manufacturing surface.

The method further comprises providing an, particularly initial, support design of a support structure for supporting the component during the buildup. The support design shall of course be set up to support particularly those surfaces of the component which require support, i.e. the mentioned support surfaces.

The method further comprises recording CAM-data for the buildup of the component.

The method further comprises calculating an, particularly optimal, gap distance to be hold or maintained during the buildup between the support structure and the support surface of the component, wherein the calculation is based on the at least one selected support surface and the recorded CAM-data, wherein the gap distance is further rated, dimensioned or calculated to be large enough to avoid a structural connection between the support surface and the support structure.

The definition of the calculation, i.e. in that way to be large enough to avoid a structural connection, can e.g. be realised in that full melting of powder in a gap between the support structure and the support surface is avoided.

By the given means it can be achieved that the support structure can be removed very easily from the component, after the component has been fully established. Further, the ex-post removal of the support structure can be carried out in a gentle way and such that the component is not damaged or exerted to adverse mechanical influences. Simultaneously, a complex and costly post-processing of the support surfaces of the component can be dispensed with.

A product, such as the simulation or calculation of the optimal gap distance, which is provided by the presented computer-implemented method of course manifests in technical advantages in the later manufacturing or buildup process which can then e.g. be carried out with a far improved parameter set.

In an embodiment, the process analysis comprises a thermal analysis and/or a stress analysis, such as by way of a finite element analysis or according simulation. By this means, the support surfaces can advantageously be selected such that issues like overheating, distortion or delamination of single layers in the additive buildup can be accounted for in advance.

In an embodiment the CAM-data comprise irradiation parameters, such as a beam energy, for irradiating the base material for the component.

In an embodiment the CAM-data comprise information of the used base material used, such as its alloy composition.

In an embodiment the CAM-data comprise information of melt pool dimensions used in the process.

These embodiments help to calculate the optimal gap distance in an efficient, expedient and accurate way. This is particularly because the melt pool dimensions are determined by irradiation parameters and e.g. also by the used base material.

In an embodiment, the CAM-data comprise information of a layer thickness at which a base material for the component is to be deposited during its additive buildup.

In an embodiment, the CAM-data comprise information of the melt pool dimension in a build direction, preferably the vertical z-direction.

In an embodiment, the CAM-data comprise information of the melt pool dimension in a lateral direction of the layer, i.e. preferably a direction of main extension of the powder surface or manufacturing plane.

According to these embodiments, the accuracy of the calculated gap distance can be further improved, as e.g. a layer thickness and an extension of the melt pools generated during the buildup process determine the structural connection between any layers which are built up and of course also a possible structural connection between the component and the support.

In an embodiment, a plurality of support surfaces which have to be supported during the buildup are selected or defined based on the component design and the process analysis as described, wherein the gap distance to be calculated varies amongst the single support surfaces. According to this embodiment, it is accounted for complex designs of the component to be buildup already in advance, i.e. in preparational steps prior to the actual manufacture of the component.

In an embodiment, the gap distance is further rated or required small enough so as to allow for a certain or minimum heat conduction or transfer of heat from the component towards the support structure.

In an embodiment the calculated gap distance or gap support distance is used for generating an adapted or optimised support design such as CAD-data of an improved support structure. According to this embodiment, the given computer-implemented method can be further used to improve the generation of support strategies as such.

A further aspect of the present invention relates to a computer program product comprising instructions which, when the program is executed by a computer or apparatus for additive manufacturing, cause this entity to carry out the method as described above.

In an embodiment, the computer program product comprises a, particularly parameter-dependent, gap distance or gap distance catalogue or library, such as in the form of a structural and/of functional data set.

A computer program product as referred to herein may relate to a computer program means constituting or comprising a storage medium like a memory card, a USB-stick, a CD-ROM, a DVD or a file downloaded or downloadable from a server or network. Such product may be provided by a wireless communication network or via transfer of the corresponding information by the given computer program, computer program product or computer program means. A computer program product referred to in here may include a non-transitory computer-readable storage medium storing applications, programs, program modules, scripts, source code, program code, object code, byte code, compiled code, interpreted code, machine code, executable instructions, and/or the like. Such non-transitory computer-readable storage media include all computer-readable media, including volatile and non-volatile media.

A further aspect of the present invention relates to a method of supporting a component or a component portion which is to be buildup by powder bed fusion.

The method comprises defining a support design for supporting overhanging or protruding regions of the component (cf. so-called "downskin"-surfaces) during its additive buildup based on a design of the component.

The method further comprises defining or providing a gap distance at which the component is held distant - preferably along the vertical build direction - from a support structure during the additive buildup, wherein the gap distance is chosen or dimensioned to be large enough to avoid a structural connection between the support surface - or as the case may be the component - and the support structure.

The method further comprises manufacturing or building up the component wherein the overhanging regions are supported by the support structure at the defined gap distance.

As compared to the previously described computer-implemented method, the given method may be characterised such that the gap distance may as well be defined without a computer implementation or software means. For instance, said definition or calculation can e.g. be performed by way of hardware only, such as by so-called field programmable gate arrays (FPGA) and/or just manually. Even though the accuracy of such definition of the gap distance may be subordinate or inferior as compared to the computer-implemented solution, expedient results and significant advantages may still result or manifest in subsequent manufacturing processes.

In an embodiment, the gap distance is defined by way of a gap distance range. Said range may be a tolerance range defining gap distances which are rated or dimensioned in such a way as to sufficiently solve the described problems, particularly the desired easy ex-post removal of the supports.

In an embodiment the support structure is a volume or block support structure. Accordingly, the support design preferably defines an according volume, block or bulk support design. The choice of a volume or block support design is best suited for the presented solution, i.e. preferably the providing of a gap between the support and the component, as mechanical and thermal effects can be determined more reliable.

In an embodiment the method of supporting makes use of the computer-implemented method as described above, at least in terms of the calculation of the gap distance.

A further aspect of the present invention relates to an apparatus for additive manufacturing being configured to control an irradiation of the base material layer, particularly a powder, such that overhanging regions or support surfaces of the component are supported by support structure at the gap distance as described above.

In an embodiment, the apparatus may comprise a data processing unit, a computer or any other controls for the given purposes.

Advantages and embodiments relating to the described computer-implemented method and/or the described computer program product may as well pertain or be valid with regard to the described method of supporting and/or the apparatus as described.

Further features, expediencies and advantageous embodiments become apparent from the following description of the exemplary embodiment in connection with the Figures.
- Figure 1: indicates by way of a schematic flow chart method steps of the present invention.
- Figure 2: indicates by way of a schematic the course of a gap between a support structure and the component to be additively manufactured.
- Figure 3: indicates by way of a sectional schematic a dimensional correlation between melt pools or weld beads in powder bed based additive manufacturing with regard to a gap distance the calculation or definition of which is subject to the present invention.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

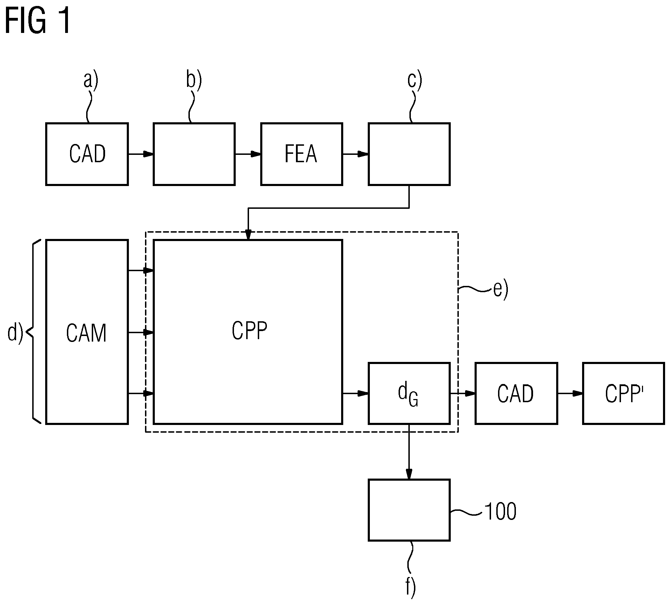

Figure 1 shows a schematic flow chart indicating method steps of an embodiment of the present invention. Part of the present invention is particularly a method of providing a gap between a rigid support structure and the component to be additively manufactured out of the powder bed, such as by selective laser melting or electron beam melting means.

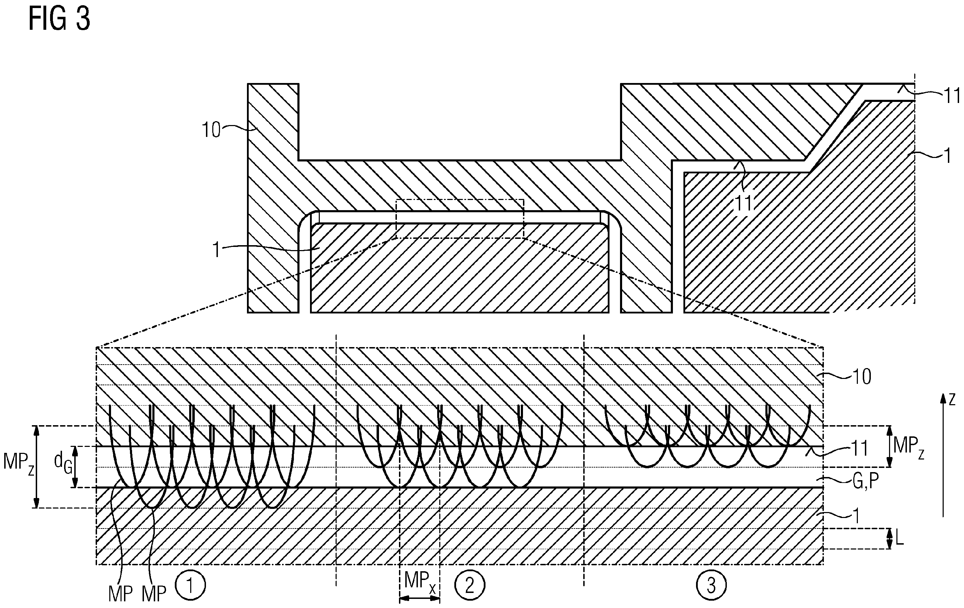

The method is, preferably, a computer-implemented method of calculating a gap distance d_{G} (see below) between a support structure 1 and a component 10 which is to be build up by powder bed fusion (see Figure 3 below).

As indicated in the upper left corner, numeral a) indicates providing a component design, such as in the form of a CAD-file of the component 10.

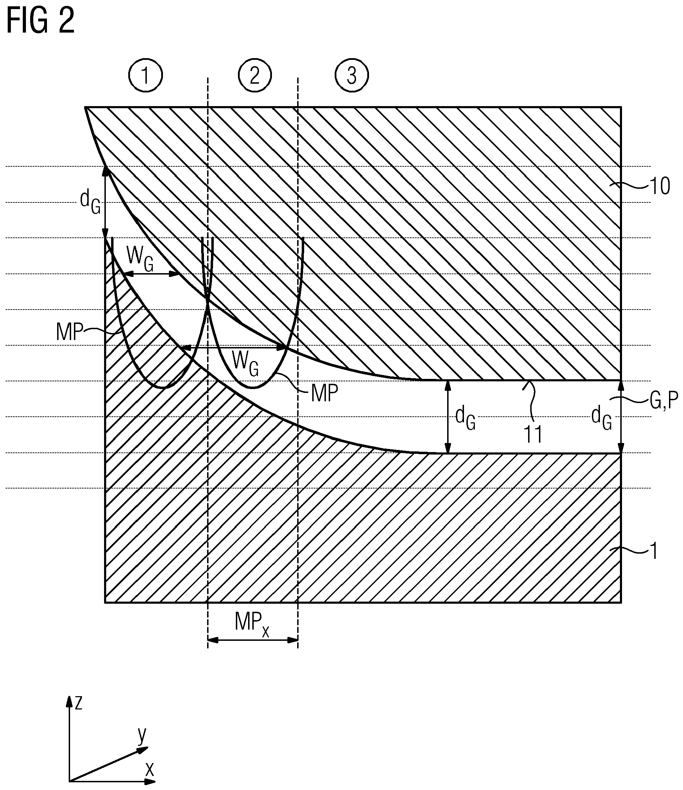

The method further comprises, b), selecting at least one support surface (cf. reference numeral 11 in Figures 2 and 3) of the component 10 based on the provided component design CAD and a process analysis. Said process analysis may comprise thermal analyses and a stress analysis such as by way of a finite element analysis (cf. numeral FEA in the horizontal process flow of the flowchart of Figure 1) or an according simulation.

The support surface shall denote a surface which has to be supported during an AM buildup. To this effect, the support surface is preferably a so-called "downskin" surface forming an overhang or protrusion.

As indicated further to the right on top of Figure 1, the method further comprises, c), providing a support design of a support structure 1 for supporting the component 10 during the buildup. This support design is, preferably, a conventional support design or a product of a conventional, e.g. computer-implemented, support strategy. Preferably, the support design of the provided support is a volume or block support.

As indicated with numeral d) on the left of Figure 1, the method further comprises recording CAM-data for the buildup of the component 11.

Said CAM-data may comprise irradiation parameters, such as a beam energy, for irradiating a base material for the component 10, information on the base material P used and information of melt pool dimensions (cf. reference numerals MP below).

Additionally or alternatively, the CAM-data may comprise information or data of a layer thickness L at which a base material P for the component 10 is to be deposited during its additive buildup and e.g. information of a melt pool dimension MP_{z}, i.e. an extension of the underlying melt pools along the vertical build direction, i.e. the z-direction as indicated in Figure 3.

Further, the CAM-data may comprise information of data of a melt pool dimension MP_{x,y} in a lateral direction of the layer.

The method further comprises, e) calculating an optimal gap distance d_{G} (cf. distance indicated in Figures 2 and 3) to be held or maintained during the buildup between the support structure 1 and the support surface 11, wherein the calculation is based on the selected support surface 11 and the recorded CAM-data.

The gap distance d_{G} is further calculated or rated to be large enough to avoid a structural connection between the support surface 11 and the support structure 11. Said connection can preferably be avoided in that a full melting of powder in the gap, i.e. over the full vertical extension of the gap, is prevented. Said prevention can in turn be achieved in that the melt pools, which an energy beam (not explicitly indicated) would generate (cf. Figures 2 and 3), do not extend over the full gap distance.

The calculated result of the (optimal) gap distance is, thus, preferably provided by a computer-implemented calculation and/or a computer program product CPP, wherein inter alia the part design (method step a)) and the CAM-parameters (method step b)) are recorded or provided as input data.

Such computer means may be necessary or expedient to calculate the gap distance with a favorable accuracy.

The calculated gap distance d_{G} may then in turn be used for generating an optimized support design, such as CAD-support data for an improved support structure.

The component design, any optimised support geometries or design may then e.g. be stored in form of a structural or functional data set, as indicated with CPP' in Figure 1. Such information may then as well be stored separately in different CAD- and/or CAM files. This allows particularly for an improved accessibility of the given data by other systems or processes, e.g. post-processing or support removal apparatuses or means.

For the present invention, it is also contemplated that the gap distance is calculated manually or by way of a hardware, such as a so-called field programmable gate array without any computer-implementation. Depending on the actual part geometry and design, the accuracy needed for the support strategy may be less.

Method step f) at the bottom of Figure 1 indicates an apparatus 100 for additive manufacturing. The apparatus 100 is preferably configured to control an irradiation or irradiation device (not explicitly indicated) such that overhanging regions or the given support surfaces 11 are supported by a support structure 1 at the gap distance d_{G} calculated as described.

Figure 2 schematically indicates the course of a gap G as shown being arranged between the support structure 1 and the component structure 10. On the left, a first region 1 is indicated. Further to the right, a second (middle) region 2, and still further to the right, a third region 3 is shown. Said regions divide the depicted gap course along a lateral direction, such as the spatial x-direction. It is shown that in the third region 3, the gap distance d_{G} is substantially constant, and the support surface is extending horizontally.

From region 3 towards the first region 1 on the left, the support surface 11 changes its geometry towards an increasingly obliquely or vertically oriented surface. This requires an adaption or change in the gap distance for an optimal support during the AM buildup.

In the first region 1, it is shown that the indicated melt pool MP exceeds the vertical and horizontal extensions of the gap, i.e. the gap width w_{G} and the gap distance or height d_{G}.

According to the present invention, the chosen gap is, thus, not sufficient and has to be increased, as the resulting melt pool in region 1 penetrates the support and, thus, forms a structural connection which does particularly not allow for an easy support removal after the additive buildup of the component 10.

A skilled person in the technical field at issue is aware of the fact that the melt pool MP which arises from the irradiation by an energy beam, depends on a large number of parameters, such as the chosen layer thickness L (cf. Figure 3), the full set of irradiation parameters as well as the chosen material or alloy composition and phase.

Provided that the gap distance is large enough as to avoid a structural connection, as shown in the middle part (cf. region 2) it may simultaneously be dimensioned such that an expedient mechanical support is provided for the support surfaces 11. It is shown that the melt pool almost (but not fully) extends from the component to the support structure 1. Thus, the mechanical support should be sufficient and, due to their at least partly melted powder material in the gap G, also a sufficient thermal transfer of heat from component to the support should be provided.

For the definition and/or calculation of the optimal gap distance d_{G}, the presented means preferably further account for local, or geometry-dependent overheating ("hotspots") or any distortion or delamination of supports or single layers during the additive buildup of the support structure 1 and the component 10.

Figure 3 further illustrates an additive manufacturing process in a sectional schematic. In the upper part of Figure 3, the component 10 to be manufactured is shown along with a volume or block support structure below an elongate overhang or support surface 11.

According to this embodiment the support structure 1 is preferably not a lattice support structure or web support structure but a bulky structure with a certain structural stability. Preferably the given (volume) structure provides the advantage of an even support surface which defines the gap, and consequently, a reliable heat conduction and mechanical stability.

It is further shown in the upper right part of Figure 3 that a plurality of different support surfaces 11 which have to be supported during the buildup are selected based on the component design and the process analysis, and wherein the gap distance d_{G} to be calculated varies for the single support surfaces 11.

The lower part of Figure 3 further shows the supported component overhang, such as a fluid-conducting cavity in service of the component, in more detail, wherein different layers L indicated by dashed horizontal lines. Said layers L shall indicate the different subsequent layers of material which are to be manufactured subsequently on top of each other as well as a layer thickness which may, in a real process amount to about 20 to 40 µm.

On the right, the build direction z is indicated by the vertical arrow facing upwards. The layers L of the buildup will be established, i.e. irradiated and subsequently solidified, along said build direction.

Aside from a single value for the gap distance, particularly when no computer-implemented means are available for the calculation or dimensioning of which, the gap distance d_{G} may be defined by way of a gap distance range, such as a tolerance range.

In the lower part of Figure 3, again three different sections or areas 1, 2 and 3 are shown.

In the middle section (section 2) it is indicated that the melt pools MP arising from the solidification of the initial layers L for the component 10 extend quite accurately over the gap distance d_{G}. This embodiment is a preferred embodiment, wherein a sufficient mechanical support and an expedient heat transfer may be given, while at the same time subsequent support removal may be carried out easily i.e. without complex post-processing efforts. Particularly this embodiment shall indicate situation wherein the gap distance is chosen or adapted to a set of manufacturing parameters in a way that the gap distance is large enough as to avoid a full melting of powder in the gap G and, therewith, a structural connection between the support surface 11 and the support structure 1.

In the gap distance d_{G} is preferably an integral multiple of the layer thickness L, such as equal to n times a layer thickness L of 10, 20, 30, 40, 50, 60, 70 or 80 µm; and being an integral number.

In the first area 1, the melt pools MP extend fully over the gap G and thereby form a structural connection, which is not preferred.

The embodiment and accordingly considered parameters for the buildup as indicated in the third area or section 3 may - on the other hand - not be sufficient as to allow for a expedient heat dissipation or thermal conduction from the melt pools towards the support during the AM buildup. Thus, the embodiment indicated in the third section 3 is also not preferred.

The component as referred to herein may particularly relate to a part or an article of complex shape, such as with filigree portions of structures. Preferably, said component is made of a high-performance material, such as a material of great strength and/or thermal resistivity stop particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Computer-implemented method of calculating a gap distance (d_{G}) between a support structure (1) and a component (10) which is to be build up by powder bed fusion, the method comprising:
- a) providing a component design (CAD) of the component (10),
- b) selecting at least one support surface (11) of the component (10) based on the provided component design (CAD) and a process analysis, wherein the support surface (11) requires support during the buildup,
- c) providing a support design of the support structure (1) for supporting the component (10) during the buildup,
- d) recording CAM-data for the buildup of the component (11), and
- e) calculating an optimal gap distance (d_{G}) to be hold during the buildup between the support structure (1) and the support surface (11), wherein the calculation is based on the selected support surface (11) and the recorded CAM-data, wherein the gap distance (d_{G}) is further rated to be large enough to avoid a structural connection between the support surface (11) and the support structure (1).

2. Method according to claim 1, wherein the process analysis comprises a thermal analysis and a stress analysis, such as by way of a finite element analysis (FEA) or simulation.

3. Method according to claim 1 or 2, wherein the CAM-data comprise irradiation parameters, such as a beam energy, for irradiating a base material for the component (10), information on the base material (P) used and information of melt pool dimensions (MP_{x,y,z}) used in the process.

4. Method according to claim 3, wherein the CAM-data comprise information of a layer thickness (L) at which a base material (P) for the component (10) is to be deposited during its additive buildup and information of a melt pool dimension (MP_{z}) in a build direction (z).

5. Method according to claim 3 or 4, wherein the CAM-data comprise information of a layer thickness (L) at which a base material (P) for the component (10) is to be deposited during its additive buildup and information of a melt pool dimension (MP_{x,y}) in a lateral direction of the layer (L).

6. Method according to one of the previous claims, wherein a plurality of support surfaces (11) which have to be supported during the buildup are selected based on the component design and the process analysis, and wherein the gap distance (d_{G}) to be calculated varies amongst the single support surfaces (11).

7. Method according to one of the previous claims, wherein the gap distance (d_{G}) is further rated small enough as to allow for a certain heat conduction from the component (10) towards the support structure (1).

8. Method according to one of the previous claims, wherein the calculated gap distance (d_{G}) is used for generating an optimized support design, such as CAD-data of an improved support structure.

9. Computer program product (CPP) comprising instructions which, when the program is executed by a computer (100), cause the computer to carry out the method of one of the previous claims.

10. Computer program product (CPP, CPP') according to claim 9, comprising a parameter-dependent gap distance (d_{G}) in the form of a structural or functional data set (CPP').

11. Method of supporting a component (10) which is to be buildup by powder bed fusion, the method comprising:
- c) defining a support design of the support structure (1) for supporting overhanging regions (11) of a component (10) during its additive buildup based on a design of the component (10),
- e) defining a gap distance (d_{G}) at which the component (10) is held distant from a support structure (1) during the additive buildup, wherein the gap distance (d_{G}) is chosen to be large enough to avoid a structural connection between the support surface (11) and the support structure (1), and
- f) manufacturing the component (10), wherein the overhanging regions (11) are supported by the support structure (1) at the defined gap distance (d_{G}).

12. Method according to claim 11, wherein the gap distance (d_{G}) is defined by way of a gap distance range.

13. Method according to claim 11 or 12, wherein the support structure (1) is a volume or block support structure (1).

14. Method according to one of claims 11 to 13, wherein the gap distance (d_{G}) is calculated according to one of claims 1 to 8.

15. Apparatus (100) for additive manufacturing, being configured to control an irradiation of a base material layer (L), particularly a powder (P), such that overhanging regions (11) are supported by a support structure (1) at the gap distance (d_{G}) calculated according to one of claims 1 to 8.
